# EUROPEAN PATENT APPLICATION

(11) **EP 4 312 126 A1**
(43) Date of publication of application: **31.01.2024**
(21) Application number: 23187471.0
(22) Date of filing: 25.07.2023
(51) Int. Cl.: G06F 11/14

(54) **PARALLELIZATION OF INCREMENTAL BACKUPS**

(30) Priority: 25.07.2022 US 202217872307
(71) Applicant: Cohesity, Inc., San Jose, CA 95110 (US)
(72) Inventor: GAUTAM, Amandeep, San Jose, 95110 (US); GUTURI, Venkata Ranga Radhanikanth, San Jose, 95110 (US)
(74) Representative: EIP

(57) **Abstract**

A backup of a current state of a storage is determined to be initiated. A previous state of the storage storing key-object entries is analyzed to identify parallelization partition identifiers. At least a portion of the partition identifiers is used as boundaries between subgroups of the key-object entries processed in parallel to perform the backup of the current state of the storage.

## Description

S3 (Amazon Simple Storage Service) is an example of object storage where objects are stored in buckets. There are typically no limits to the number of objects that may be stored in a bucket. Each object may be up to 5 TB in size. Storage such as S3 may store objects using a flat namespace. A list of the objects stored in a bucket may be obtained using an applications programming interface (API) associated with storage such as S3 (e.g., ListObjectsV2), but the API associated with said storage may cause a bottleneck to occur because obtaining the list of objects stored in the bucket is a slow, single-threaded process. The API may return a list of a particular number of objects (e.g., 1000). As a result, the API may be repeatedly called until the API call does not return any more objects.

### BRIEF DESCRIPTION OF THE DRAWINGS

Various embodiments of the invention are disclosed in the following detailed description and the accompanying drawings.
FIG. 1A illustrates an example of a flat namespace associated with an object storage bucket.
FIG. 1B illustrates an example of partition identifiers associated with an object storage bucket.
FIG. 2 is a block diagram illustrating an embodiment of a system for performing a backup of an object storage bucket.
FIG. 3 is a flow diagram illustrating a process for performing an incremental backup in accordance with some embodiments.
FIG. 4 is a flow diagram illustrating a process for generating a checkpoint file in accordance with some embodiments.
FIG. 5 is a flow diagram illustrating a process for performing a backup in accordance with some embodiments.
FIG. 6 is a flow diagram illustrating a process for traversing an assigned subgroup in accordance with some embodiments.

### DETAILED DESCRIPTION

A plurality of objects may be stored at a storage, such as a cloud storage, in an object storage bucket (e.g., S3 bucket). The storage may be referred to as object storage. A storage system, that may be separate to the storage and object storage bucket, may perform a backup of the object storage bucket. The storage system may alternatively be referred to as a backup system. A backup of the object storage bucket is performed to capture a state of the object storage at a particular point in time at the storage system, so that the object storage bucket may be restored in the event of corruption to its state at the particular point in time or so that the state of the object storage at the particular point in time may be replicated elsewhere, using the backup. Performing a backup, which may be referred to as "backing up" includes ingesting data from the storage.

An initial backup may be a full backup. A full backup may be performed by utilizing an API associated with the object storage (e.g., ListObjectV2, ListObjectVersions, etc.). One or more API calls or requests may be made to traverse the object storage bucket by obtaining a list of object(s) stored in the object storage bucket and reading the list to identify the object(s) stored in the object storage bucket. The storage system may generate a checkpoint file associated with the full backup that indicates the objects included in the list. The checkpoint file associated with the full backup may represent the order in which objects stored in the object storage bucket were encountered. The checkpoint file may list objects stored in the object storage bucket in a lexicographically sorted order. Lexicographically sorted order may also be referred to as dictionary order. Sorting objects lexicographically allows objects having alphanumeric names to be sorted.

Having created the checkpoint file, the storage system may subsequently ingest the data associated with the identified object(s) from the object storage bucket. The storage system may utilize the API associated with the object storage to obtain a subsequent list of object(s) stored in the object storage bucket, in parallel, as the storage system is ingesting the data associated with the identified object(s). The subsequent list of object(s) comprises object(s) stored in the object storage bucket that are stored after the objects in the previous list. The above process of traversing the cloud object storage to identify a subsequent set of objects and ingesting data associated with a previous set of objects, in parallel, may continue until an API call no longer returns a list of objects (e.g., the end of the cloud object storage has been reached or the last object stored in the cloud object storage has been retrieved). The storage system may complete the full backup of object storage bucket by ingesting the data associated with a last list of objects stored in the object storage bucket.

An incremental backup of the object storage bucket may be performed by identifying one or more objects associated with the object storage bucket that have changed since a previous backup (e.g., a previous full backup or a previous incremental backup), which may be a most-recent backup. However, data relating to objects that have changed since the previous backup may not be available directly from the object storage or object storage bucket. A cloud storage provider associated with the object storage bucket may not offer an API that provides a change tracking function for an object storage bucket. A change associated with the object storage bucket may include an object being deleted after the previous backup, a change in metadata associated with an object after the previous backup, a change in data associated with the object after the previous backup, and a creation of an object after the previous backup.

Instead, the storage system performing the incremental backup may be configured to determine the changes since a most recent backup. The incremental backup of the object storage bucket may be performed by utilizing the API associated with the object storage (e.g., ListObjectV2, ListObjectVersions, etc.). The object storage bucket may be traversed, the object(s) stored in the object storage bucket may be identified, and metadata associated with the object(s) included in the object storage bucket may be obtained. The metadata associated with the object(s) may include, for each object, one or more of a key, a hash, a timestamp indicating a time at which the object was last modified, an owner name or identifier, a size of the object, or a storage class of the object.

A checkpoint file associated with a previous backup (e.g., a previous full backup or a previous incremental backup) may be read and compared to the objects identified in the traversed object storage bucket to identify one or more differences between a current state of the object storage bucket and a previous state of the object storage bucket corresponding to the previous backup. A checkpoint file associated with the previous backup may be referred to as a first checkpoint file. The storage system may subsequently ingest the data associated with the one or more identified differences (e.g., object metadata and/or object data content). Changes to objects in the object storage can therefore be determined at the storage system, rather than being received from the object storage. A change associated with the object storage bucket may include an object being deleted after the previous backup, a change in metadata associated with an object after the previous backup, a change in data associated with the object after the previous backup, and a creation of an object after the previous backup. A deleted object may be determined based on it being present in the previous state of the storage but not in the current state. Changes in metadata may be determined based on a direct comparison of a field in the metadata between the current state and the previous state of the storage. Changes in data may be determined based on an object having a different timestamp for when it was last modified and/or a different size or storage class in the current state when compared to the previous state.

However, the plurality of objects may be stored in the object storage bucket using a flat namespace. To provide metadata in the object storage bucket that can be compared with the checkpoint file, other systems may walk the entire namespace to identify the object(s) stored in the object storage bucket to obtain a full list of the objects and associated metadata currently in the object storage bucket, for comparison. The full list of objects and associated metadata is then compared with the checkpoint file in full. Subsequently, after the entire contents of the object storage bucket have been obtained and compared, said other systems begin to ingest the data associated with the object(s) stored in the object storage bucket. An incremental backup of the object storage bucket may take a long time to perform because the full namespace is walked, changes are then determined, and only then the data is ingested. The overall time to perform an incremental backup of the object storage bucket may be increased when there are many objects stored in the object storage bucket.

It is desirable to reduce the time to perform an incremental backup of storage, and particularly an object storage bucket. The storage, or the object storage bucket, may be inaccessible while the backup is being performed. Furthermore, the incremental backup may occupy the storage system performing the backup for a long time, meaning it may not be able to perform other tasks, and may not be able to perform the incremental backup as often. During this time computational resources of both the storage and the storage system performing the backup may be unavailable, or availability may be restricted, for other tasks. Lastly, where backups take a long time to complete, they may not be available to restore the storage should corruption occur, meaning that a previous, less relevant backup needs to be used to restore the storage.

Techniques to parallelize an incremental backup are disclosed herein. The disclosed techniques reduce the amount of time needed to perform an incremental backup of object(s) stored in an object storage bucket. Although the techniques are described with respect to backup, the techniques disclosed herein may be applicable whenever a data management operation (e.g., backup, migration, replication, archive, etc.) is performed for a cohort of data that is provided from a first system to a second system. The techniques are applicable to incremental data management operations, but may also be applied to full backups or other data management operations.

The techniques include determining that a backup of the current state of the object storage is to be performed, which may be referred to as determining to initiate a backup of a current state of an object storage bucket. A storage system may include a scheduler. The scheduler may determine that a backup of the current state of the object storage bucket is to be performed according to one or more backup policies. In some embodiments, a backup policy may indicate that the one or more objects are to be backed up on a periodic basis (e.g., hourly, daily, weekly, monthly, etc.), in response to a command from a user, etc. In some embodiments, a full backup of the current state of the object storage bucket may be determined to be performed. In some embodiments, an incremental backup of the current state of the object storage bucket may be determined to be performed.

Because storage such as S3 may not include an associated API with the ability to determine the number of objects in an object storage bucket or the ability to directly access an object based on its ordinality in a list, the storage system may be unable to directly determine how to subdivide the object storage bucket (e.g., divide the object storage bucket by 10K entries) from a current state of the object storage bucket.
The techniques further include determining, based on key-object entries corresponding to a plurality of objects stored by the storage in the previous state, parallelization partition identifiers. This may comprise or may be referred to as analyzing the previous state of the storage storing key-object entries to identify parallelization partition identifiers. The parallelization partition identifiers may be determined based on a checkpoint file associated with a backup of the previous state of the storage, which may be referred to as a previous backup. The checkpoint file may comprise a list of the plurality of objects stored by the storage in the previous state. The checkpoint file associated with the backup of the previous state of the storage may be referred to as the first checkpoint file. The list associated with the first checkpoint file may be referred to as the first list. The first list may comprise key-object entries corresponding to the plurality of objects. The first list may comprise metadata associated with the plurality of objects. Parallelization partition identifiers, which may be referred to more concisely as "partition identifiers", represent boundaries that divide key-object entries into subgroups. In other words, a partition identifier may indicate a beginning entry or an end entry of a subgroup. A subgroup may be defined between two partition identifiers. A subgroup may comprise both of the partition identifiers, or may comprise one or neither of the partition identifiers that define it.

The storage system may read the first checkpoint file to identify the partition identifiers. A partition identifier may corresponds to an object associated with the object storage bucket. In some embodiments, the partition identifiers may indicate every kth entry of the first checkpoint file associated with the previous backup (e.g., every 10,000 objects). The object storage bucket may be comprised of a plurality of objects, each object associated with a corresponding key. The storage system may determine the keys corresponding to the kth entries and designates the keys corresponding to the kth entries to be partition identifiers. In other embodiments, the partition identifiers may be determined to split the entries differently.

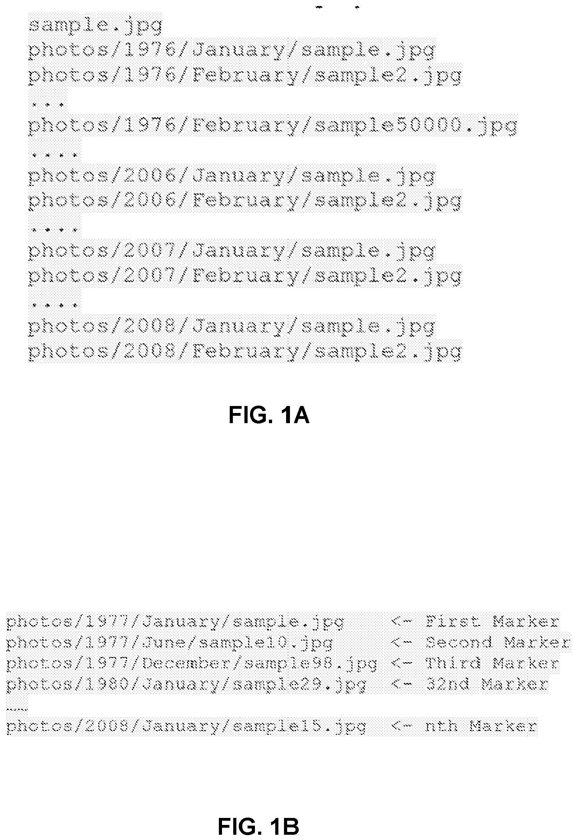

The object storage bucket may be associated with a flat namespace. FIG. 1A illustrates an example of a flat namespace associated with an object storage bucket. By reading the first checkpoint file associated with the previous backup, the storage system may determine the partition identifiers to be the partition identifiers illustrated in FIG. 1B. A subgroup may correspond to objects included in the object storage bucket that are between partition identifiers. For example, a subgroup may correspond to the objects included between 'photos/1977/January/sample.jpg'" to 'photos/1977/June/samplel0.jpg'. In some embodiments, an object corresponding to a beginning boundary of the subgroup is included in the subgroup and an object corresponding to an ending boundary of the subgroup is included in a subsequent subgroup. In some embodiments, an object corresponding to a beginning boundary of the subgroup is included in a previous subgroup and an object corresponding to an ending boundary of the subgroup is included in the subgroup. Each of the subgroups is assigned a corresponding prefetcher. For example, a first prefetcher associated with a first subgroup may be assigned to walk a range of ` { }' to `photos/1977/January/sample.jpg' and a second prefetcher associated with a second subgroup may be assigned to walk a range of `photos/1977/January/sample.jpg' to 'photos/1977/June/sample10.jpg'.

The techniques further include performing a backup of current state of the storage. The backup may be performed by backing up, in parallel, at least a portion of the plurality of subgroups. For example, at least a first subgroup and a second subgroup of the plurality of subgroups may be backed up in parallel. The first subgroup and second subgroup may be consecutive subgroups that are divided by a partition identifier. The backup may be performed by utilizing at least a portion of the partition identifiers as boundaries between the subgroups of the key-object entries processed in parallel to perform the backup of the current state of the storage. The object namespace associated with the object storage bucket may be divided into a plurality of subgroups to parallelize the object storage bucket walk and/or the ingestion of objects by the storage system. In some embodiments, an entire partition identifier may be used as a boundary between subgroups. For example, `photos/1977/January/sample.jpg' may be used as a boundary between subgroups. In other examples, a part of a partition identifier may be used as the boundary.

Backing up the subgroups may comprise, for each subgroup, obtaining a list of one or more objects stored by the storage in the current state that are associated with the subgroup from the storage. To distinguish from the first list associated with the first checkpoint file, the list of one or more objects stored by the storage in the current state may be referred to as a second list. The second list of one or more objects may comprise key-object entries corresponding to the one or more objects. Data corresponding to the one or more objects may be ingested from the storage based on the second list. Obtaining the second list of the data in each subgroup, prior to ingesting it, enables the storage system to determine what is stored in the storage first. Said determination may be enable changes to be determined, so that an incremental backup may be performed, and may lead to improvements in how the parallel processing of the subgroups is performed.

The above may be implemented in the storage system using a prefetcher orchestrator and a plurality of prefetchers. The prefetcher orchestrator may assign a corresponding prefetcher to each of the subgroups. The prefetchers may, in parallel, discover the object(s) associated with a corresponding subgroup. In other words, the prefetchers may, in parallel, for their assigned subgroups, obtain the second lists of the objects associated with subgroup and stored by the storage in its current state. In some embodiments, a prefetcher may utilize the API associated with the object storage to list the objects associated with a subgroup until a partition identifier associated with a subsequent group is obtained. For example, a beginning boundary of a first subgroup may be a " " value or a null value and an ending boundary of the first subgroup may be an object-key pair having a key of "object10000". A beginning boundary for a second subgroup may be the object-key pair having the key of "object10000". The API associated with the object storage may list 1000 objects at a time. The storage system may continue to utilize the API associated with the object storage until the returned list includes a key of "object10000". In some embodiments, a prefetcher may utilize the API associated with object storage to list the objects associated with a subgroup until the API associated with the object storage does not return any more objects (e.g., an end boundary for the last subgroup is a " " value or a null value).

To ensure that the parallel processing of subgroups is efficient, lists of objects received from the storage may be analyzed to determine whether the entire subgroup has been traversed. Calls may be made to the API to request the list of objects associated with the subgroup. The API may return a predetermined or finite number of entries in response to each call. Each time the API associated with the object storage returns a list of objects or a portion of the list of objects associated with the subgroup, the prefetcher associated with a subgroup may store the entries associated with the list in memory. The prefetcher associated with the subgroup may analyze the entries to determine if they include a partition identifier associated with an end boundary of the present subgroup or a boundary associated with a subsequent subgroup. In response to a determination that the entries do not include the partition identifier associated with the subsequent subgroup, the prefetcher may continue to utilize the API associated with the object storage to obtain a list of objects for the subgroup. In response to a determination that the entries include the partition identifier associated with the subsequent subgroup, the prefetcher may update a checkpoint file associated with the current backup to include the entries stored in memory. The checkpoint file associated with the backup may be updated to store the entries in lexicographically sorted order. The checkpoint file associated with the current backup may be referred to as the second checkpoint file to distinguish it from the first checkpoint file associated with the backup of the previous state.

However, in some embodiments, one or more prefetchers associated with one or more subsequent subgroups may finish traversing the one or more subsequent subgroups before a prefetcher associated with a previous subgroup finishes traversing the previous subgroup. The entries fetched by the one or more prefetchers associated with one or more subsequent subgroups may be stored in memory. The entries fetched by the one or more prefetchers associated with one or more subsequent subgroups may not be included in the checkpoint file associated with the backup until the prefetcher associated with the previous subgroup finishes traversing the previous subgroup and updates the checkpoint file. Put another way, a prefetcher updates the checkpoint file to include the entries dependent on determining that a prefetcher associated with the previous subgroup has updated the checkpoint file. This may ensure that entries included in the checkpoint file are listed in lexicographically sorted order.

Each subgroup may have an expected number of entries (e.g., k entries). In some embodiments, the prefetcher may reach the first entry of the next subgroup in an expected manner (e.g., k entries + a threshold number of entries) and may update the checkpoint file. In some embodiments, the prefetcher may not reach the first entry of the next subgroup in an expected manner (e.g., traversed more than k + a threshold number of entries). In response to determining that the subgroup includes more entries than expected, the prefetcher may stop traversing the assigned subgroup and may update the checkpoint file to include the entries associated with a partial walk of the subgroup that are stored in memory. A prefetcher orchestrator may further subdivides the remaining portion of the subgroup associated to that prefetcher into a plurality of subsets.

In some embodiments, a portion of a partition identifier may be used as a boundary. The prefetcher orchestrator may utilize the checkpoint file associated with the previous backup to identify delimiters associated with a subgroup. The prefetcher orchestrator may determine common prefixes among the remaining objects associated with the subgroup based on the identified delimiters. For example, the prefetcher orchestrator may utilize `photos/2007/' of FIG. 1A as a boundary between subsets and/or between a last subset and a subsequent subgroup.

The prefetcher orchestrator may assign prefetchers to the subsets. The prefetchers may walk the subsets until the remaining portion of the subgroup is traversed. In some embodiments, a subset of a subgroup may be further subdivided.

Accordingly, there are two ways in which a checkpoint file may be updated: the checkpoint file may be updated dependent on determining that one or more entries include a partition identifier representing an end boundary of the subgroup or a beginning boundary of a subsequent subgroup, or the checkpoint file may be updated dependent on determining that a number of entries received for the subgroup via the API exceeds an expected number of entries for the subgroup. In response to determining that the number of entries received for the subgroup via the API exceeds the expected number of entries for the subgroup, a remaining portion of the subgroup may be subdivided into a plurality of subsets. The subsets may also be backed up at least in part in parallel.

In response to a checkpoint file being updated by a prefetcher, the storage system may read a portion of the checkpoint file associated with the previous backup corresponding to objects assigned to the prefetcher (e.g., until the partition identifier associated with the subsequent subgroup is encountered) and may compare the objects included in the read portion of the checkpoint file associated with the previous backup to the objects included in the updated portion of the checkpoint file associated with the current backup. The objects included in the checkpoint file associated with the previous backup and the checkpoint file associated with the current backup may be listed in a lexicographically sorted order. The storage system may identify one or more differences between a current state of the object storage bucket and a previous state of the object storage bucket corresponding to the previous backup based on the comparison. In response to identifying one or more differences, the storage system may ingest the data associated with the one or more identified differences (e.g., object metadata and/or object data content). The storage system may ingest data associated with the one or more identified differences as one or more other prefetchers continue to walk their assigned subgroups. In some embodiments, the storage system may determine there are no differences between the read portion of the checkpoint file associated with the previous backup and the objects included in the updated portion of the checkpoint file.

The disclosed technique may reduce the amount of time needed to perform an incremental backup of object(s) stored in an object storage bucket because the object storage bucket is divided into a plurality of subgroups and the new data associated with the plurality of subgroups (new object content data and/or new object metadata) may be ingested in parallel. The techniques described herein provide ways in which the division of an object storage bucket may be achieved efficiently, by using previous backup data to identify partition identifiers for defining boundaries between subgroups. As a result, the storage system is able to determine how objects in an object storage bucket may be split up for parallel processing without knowledge of a current state of the object storage bucket and without reference to the object storage bucket. Accordingly, the storage system does not make unnecessary calls to the object storage bucket or an API associated therewith, which may be time-consuming, and instead can act independently and quickly. The techniques described herein also provide ways for determining when sufficient data associated with a subgroup has been received based on the boundaries or otherwise, by combining the partition identifiers with expected numbers of entries to be retrieved, and subsequently performing further splitting if required to improve parallelization. Accordingly, incremental backups, as well as full backups or other operations that may be performed according to these techniques, may be made more efficient and use fewer computational resources.

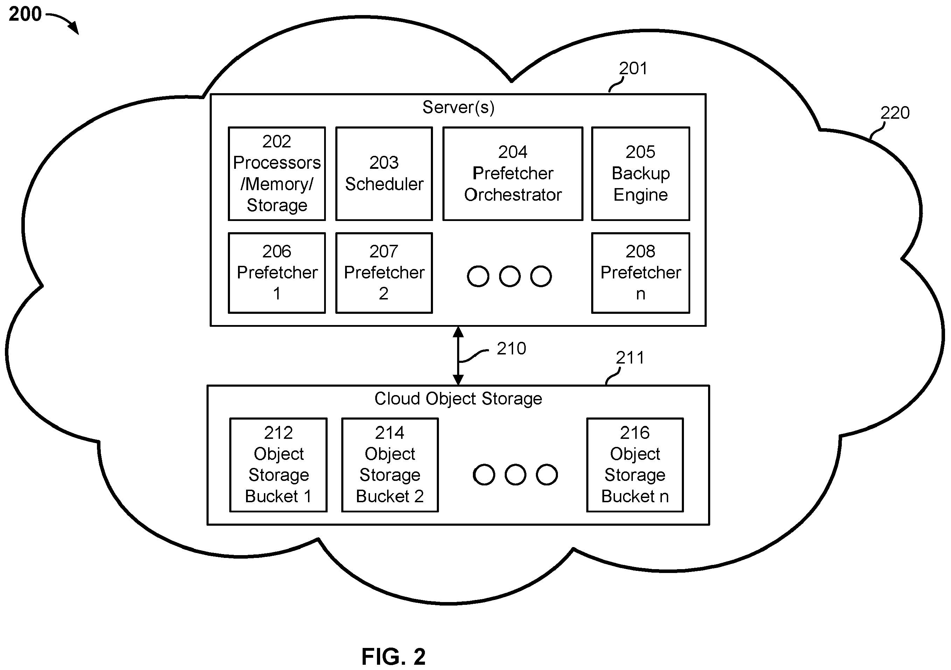

FIG. 2 is a block diagram illustrating an embodiment of a system for performing a backup of an object storage bucket. In the example shown, system 200 includes one or more servers 201 coupled to cloud object storage 211 in cloud environment 220 via connection 210. Cloud environment 220 may be a public cloud, a private cloud, a hybrid cloud, etc. Cloud storage 211 may be provided by a cloud provider (e.g., Amazon Web Services^{™}, Microsoft^{™} Azure, Google Cloud^{™}, etc.).

The one or more servers 201 (e.g., one or more EC2 instances) may be part of a data plane associated with a data management as a service (DMaaS) provider. The one or more servers 210 may be associated with corresponding processors, memory, and storage 202. In some embodiments, the one or more servers 201 are on-prem at a datacenter rather than being in the cloud environment 220.

The one or more servers 201 include scheduler 203. Scheduler 203 may determine to initiate a backup of a current state of one of the object storage buckets 212, 214, 216. Scheduler 203 may determine that a backup of the current state of the object storage bucket is to be performed according to one or more backup policies. In some embodiments, a backup policy indicates that the one or more objects are to be backed up on a periodic basis (e.g., hourly, daily, weekly, monthly, etc.), in response to a command from a user, etc. In some embodiments, a full backup of the current state of the object storage bucket is determined to be performed. In some embodiments, an incremental backup of the current state of the object storage bucket is determined to be performed.

The one or more servers 201 include backup engine 205. Backup engine 205 analyzes a previous state of one of the object storage buckets to identify parallelization partition identifiers or more concisely "partition identifiers". The one or more servers 201 store a checkpoint file associated with a previous backup. Backup engine 205 reads the checkpoint file associated with the previous backup to identify the partition identifiers. A partition identifier corresponds to an object associated with the object storage bucket (e.g., an object key). In some embodiments, the partition identifiers are every kth entry of the checkpoint file associated with the previous backup (e.g., every 10,000 objects). Object storage buckets 212, 214, ..., 216 are flat namespaces. An object storage bucket is comprised of a plurality of objects, each object associated with a corresponding key. Backup engine 205 determines the keys corresponding to the kth entries and designates the keys corresponding to the kth entries to be partition identifiers.

Backup engine 205 utilizes at least a portion of the partition identifiers as boundaries between subgroups of the key-object entries processed in parallel to perform the backup of the current state of an object storage bucket. The object namespace associated with the object storage bucket is divided into a plurality of subgroups to parallelize the object storage bucket walk. As a result, a queue of subgroups may be generated. Prefetcher orchestrator 204 assigns a corresponding prefetcher to each of the subgroups. The one or more servers 201 includes prefetchers 206, 207, ..., 208. Although three prefetchers are depicted, the one or more servers 201 may include 1:*n* prefetchers. The prefetchers 206, 207, ..., 208 may be scaled up or down depending upon system resources, the number of subgroups, network bandwidth, etc. In some embodiments, the number of subgroups in the queue is less than the number of prefetchers. In some embodiments, the number of subgroups in the queue is equal to the number of prefetchers. In some embodiments, the number of subgroups in the queue is greater than the number of prefetchers. The queue may be a priority queue (e.g., first in first out queue). Prefetcher 206 may be assigned to a first subgroup. After prefetcher 206 has finished discovering object(s) associated with the first subgroup, prefetcher orchestrator 204 may assign the prefetcher 206 to a next subgroup in the queue. In some embodiments, the next subgroup in the queue is a subset of a subgroup.

The prefetchers 206, 207, ..., 208, in parallel, discover the object(s) associated with a corresponding subgroup. In some embodiments, a prefetcher utilizes the API associated with cloud object storage 211 to list the objects associated with a subgroup until a partition identifier associated with a subsequent group is obtained. In some embodiments, a prefetcher utilizes the API associated with cloud object storage 211 to list the objects associated with a subgroup until the API associated with cloud object storage 211 does not return any more objects (e.g., an end boundary for the last subgroup is a " " value or a null value.

Each time the API associated with cloud object storage 211 returns a list of objects for a subgroup, the prefetcher associated with the subgroup stores the entries associated with the list in memory 202. The prefetcher associated with the subgroup analyzes the entries to determine if they include a partition identifier associated with a subsequent subgroup. In response to a determination that the entries do not include the partition identifier associated with the subsequent subgroup, the prefetcher continues to utilize the API associated with cloud object storage 211 to obtain a list of objects for the subgroup. In response to a determination that the entries include the partition identifier associated with the subsequent subgroup, the prefetcher updates the checkpoint file associated with the current backup to include the entries stored in memory 202. The checkpoint file associated with the backup is updated to store the entries in lexicographically sorted order.

However, in some embodiments, one or more prefetchers associated with one or more subsequent subgroups finish traversing the one or more subsequent subgroups before a prefetcher associated with a previous subgroup finishes traversing the previous subgroup. The entries fetched by the one or more prefetchers associated with one or more subsequent subgroups are stored in memory 202. The entries fetched by the one or more prefetchers associated with one or more subsequent subgroups are not included in the checkpoint file associated with the backup until the prefetcher associated with the previous subgroup finishes traversing the previous subgroup and updates the checkpoint file. This ensures that entries included in the checkpoint file are listed in lexicographically sorted order. For example, the entries fetched by the prefetchers 207, 208 are not included in the checkpoint file associated with the current backup until prefetcher 206 finishes traversing the previous subgroup and updates the checkpoint file associated with the current backup.

Each subgroup has an expected number of entries (e.g., k entries). In some embodiments, the prefetcher reaches the first entry of the next subgroup in an expected manner (e.g., k entries + a threshold number of entries) and updates the checkpoint file. In some embodiments, the prefetcher does not reach the first entry of the next subgroup in an expected manner (e.g., traversed or walked more than k + a threshold number of entries). In response to determining that the subgroup includes more entries than expected, the prefetcher stops traversing the assigned subgroup and updates the checkpoint file to include the entries associated with a partial walk of the subgroup that are stored in memory 202. Prefetcher orchestrator 204 further subdivides the remaining portion of the subgroup associated to that prefetcher into a plurality of subsets. A portion of a partition identifier is used as a boundary between subgroups. Prefetcher orchestrator 204 may utilize the checkpoint file associated with the previous backup to identify delimiters associated with a subgroup. Prefetcher orchestrator 204 determines common prefixes among the remaining objects associated with the subgroup based on the identified delimiters to divide the subgroup into a plurality of subsets. Prefetcher orchestrator 204 assigns prefetchers to the subsets. In some embodiments, the prefetcher assigned to walk the subgroup is assigned to walk one of the subsets. The prefetchers walk the subsets until the remaining portion of the subgroup is traversed. In some embodiments, a subset of a subgroup is further subdivided.

In some embodiments, in response to a checkpoint file being updated by a prefetcher, backup engine 205 reads a portion of the checkpoint file associated with the previous backup corresponding to objects assigned to the prefetcher (e.g., until the partition identifier associated with the subsequent subgroup is encountered) and compares the objects included in the read portion of the checkpoint file associated with the previous backup to the objects included in the updated portion of the checkpoint file associated with the current backup. The objects included in the checkpoint file associated with the previous backup and the checkpoint file associated with the current backup are listed in lexicographically sorted order. Backup engine 205 may identify one or more differences between a current state of the object storage bucket and a previous state of the object storage bucket corresponding to the previous backup based on the comparison. In response to identifying one or more differences, backup engine 205 ingests the data associated with the one or more identified differences (e.g., object metadata and/or object data content). Backup engine 205 may ingest data associated with the one or more identified differences as one or more other prefetchers continue to walk their assigned subgroups. In some embodiments, backup engine 205 determines there are no differences between the read portion of the checkpoint file associated with the previous backup and the objects included in the updated portion of the checkpoint file associated with the current backup.

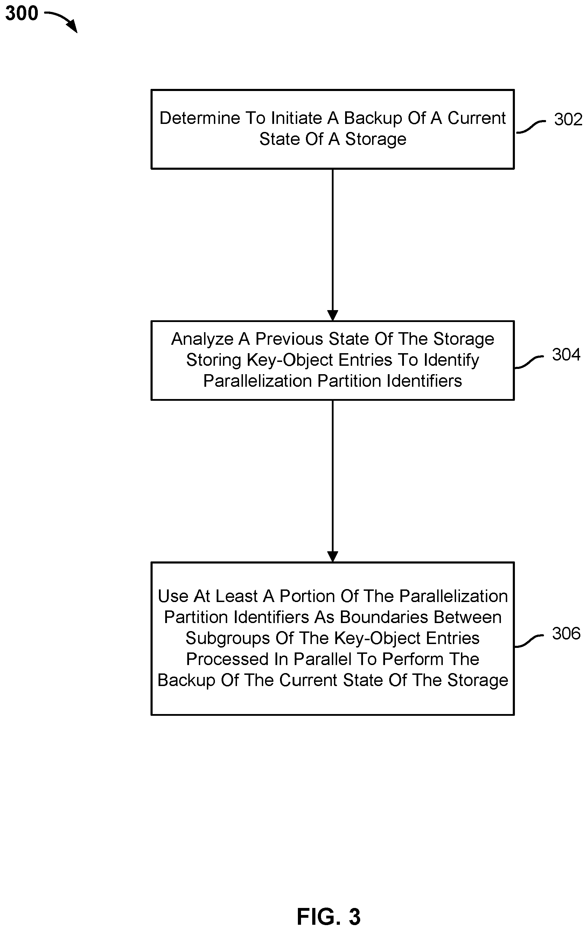

FIG. 3 is a flow diagram illustrating a process for performing an incremental backup in accordance with some embodiments. In the example shown, process 300 may be implemented by a storage system, such as one or more servers 201.

At 302, a backup of a current state of a storage is determined to be initiated. A storage system includes a scheduler. The scheduler may determine that a backup of the current state of the object storage bucket is to be performed according to one or more backup policies. In some embodiments, a backup policy indicates that the one or more objects are to be backed up on a periodic basis (e.g., hourly, daily, weekly, monthly, etc.), in response to a command from a user, etc. In some embodiments, a full backup of the current state of the object storage bucket is determined to be performed. In some embodiments, an incremental backup of the current state of the object storage bucket is determined to be performed.

At 304, a previous state of the storage storing key-object entries is analyzed to identify partition identifiers. A storage system obtains a checkpoint file associated with a previous backup to identify the partition identifiers. The checkpoint file associated with a previous backup of the storage is utilized to identify key-object entries corresponding to objects as the boundaries between the subgroups. A partition identifier corresponds to an object associated with the object storage bucket. In some embodiments, the partition identifiers are every kth entry of the checkpoint file associated with the previous backup (e.g., every 10,000 objects). The object storage bucket is comprised of a plurality of objects, each object associated with a corresponding key. The storage system determines the keys corresponding to the kth entries and designates the keys corresponding to the kth entries to be parallelization partition identifiers.

At 306, at least a portion of the partition identifiers are used as boundaries between subgroups of the key-object entries processed in parallel to perform the backup of the current state of the storage. The object namespace associated with the object storage bucket is divided into a plurality of subgroups to parallelize the object storage bucket walk. In some embodiments, an entire partition identifier is used as a boundary between subgroups. For example, `photos/1977/January/sample.jpg' of FIG. 1B may be used as a boundary between subgroups.

A prefetcher orchestrator assigns a corresponding prefetcher to each of the subgroups. The prefetchers, in parallel, discover the object(s) associated with a corresponding subgroup. In some embodiments, a prefetcher utilizes the API associated with the cloud object storage to list the objects associated with a subgroup until a partition identifier associated with a subsequent group is obtained. For example, a beginning boundary of a first subgroup may be a " " value or a null value and an ending boundary of the first subgroup may be an object-key pair having a key of "object10000". A beginning boundary for a second subgroup may be the object-key pair having the key of "object10000". The API associated with the cloud object storage may list 1000 objects at a time. The storage system may continue to utilize the API associated with the cloud object storage until the returned list includes a key of "object10000". The ending boundary for a last subgroup may be a " " value or a null value.

Each time the API associated with the cloud object storage returns a list of objects, the prefetcher associated with a subgroup stores the entries associated with the list in memory. The prefetcher associated with the subgroup analyzes the entries to determine if they include a partition identifier associated with a subsequent subgroup. In response to a determination that the entries do not include the partition identifier associated with the subsequent subgroup, the prefetcher continues to utilize the API associated with cloud object storage to obtain a list of objects for the subgroup. In response to a determination that the entries include the partition identifier associated with the subsequent subgroup, the prefetcher updates a checkpoint file associated with the current backup to include the entries stored in memory. The checkpoint file associated with the backup is updated to store the entries in lexicographically sorted order.

However, in some embodiments, one or more prefetchers associated with one or more subsequent subgroups finish traversing the one or more subsequent subgroups before a prefetcher associated with a previous subgroup finishes traversing the previous subgroup. The entries fetched by the one or more prefetchers associated with one or more subsequent subgroups are stored in memory. The entries fetched by the one or more prefetchers associated with one or more subsequent subgroups are not included in the checkpoint file associated with the backup until the prefetcher associated with the previous subgroup finishes traversing the previous subgroup and updates the checkpoint file. This ensures that entries included in the checkpoint file are listed in lexicographically sorted order.

Each subgroup has an expected number of entries (e.g., k entries). In some embodiments, the prefetcher reaches the first entry of the next subgroup in an expected manner (e.g., k entries + a threshold number of entries) and updates the checkpoint file. In some embodiments, the prefetcher does not reach the first entry of the next subgroup in an expected manner (e.g., traversed or walked more than k + a threshold number of entries). In response to determining that the subgroup includes more entries than expected, the prefetcher stops traversing the assigned subgroup and updates the checkpoint file to include the entries associated with a partial walk of the subgroup that are stored in memory. A prefetcher orchestrator further subdivides the remaining portion of the subgroup associated to that prefetcher into a plurality of subsets.

In some embodiments, a portion of a partition identifier is used as a boundary between subgroups. The prefetcher orchestrator may utilize the checkpoint file associated with the previous backup to identify delimiters associated with a subgroup. The prefetcher orchestrator determines common prefixes among the remaining objects associated with the subgroup based on the identified delimiters. For example, the prefetcher orchestrator may utilize `photos/2007/' of FIG. 1A as a boundary between subsets and/or between a last subset and a subsequent subgroup.

The prefetcher orchestrator assigns prefetchers to the subsets. The prefetchers walk the subsets until the remaining portion of the subgroup is traversed. In some embodiments, a subset of a subgroup is further subdivided.

In response to a checkpoint file being updated by a prefetcher, the storage system reads a portion of the checkpoint file associated with the previous backup corresponding to objects assigned to the prefetcher (e.g., until the partition identifier associated with the subsequent subgroup is encountered) and compares the objects included in the read portion of the checkpoint file associated with the previous backup to the objects included in the updated portion of the checkpoint file associated with the current backup. The objects included in the checkpoint file associated with the previous backup and the checkpoint file associated with the current backup are listed in lexicographically sorted order. The storage system may identify one or more differences between a current state of the object storage bucket and a previous state of the object storage bucket corresponding to the previous backup based on the comparison. In response to identifying one or more differences, the storage system ingests the data associated with the one or more identified differences (e.g., object metadata and/or object data content). The storage system may ingest the data associated with the one or more identified differences as one or more other prefetchers continue to walk their assigned subgroup. In some embodiments, the storage system determines there are no differences between the read portion of the checkpoint file associated with the previous backup and the objects included in the updated portion of the checkpoint file.

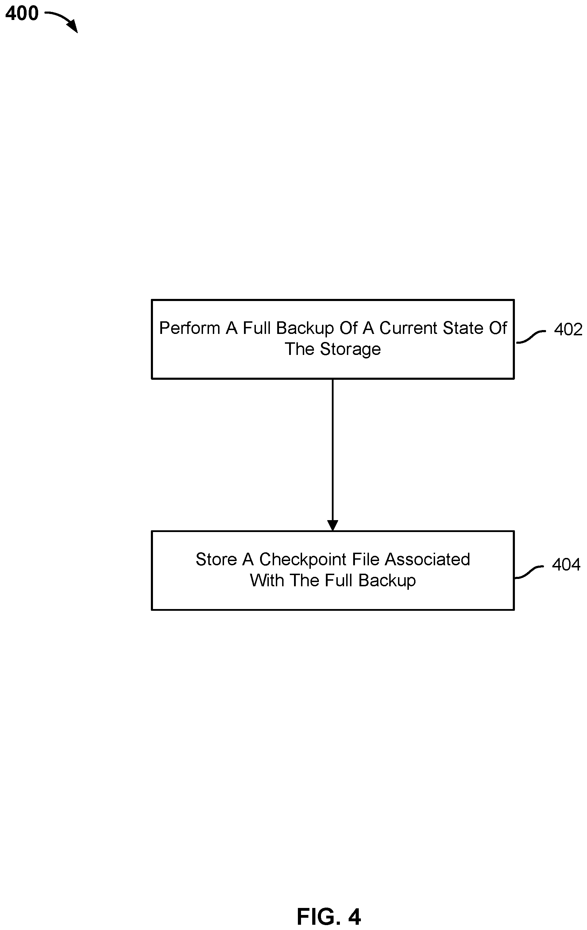

FIG. 4 is a flow diagram illustrating a process for generating a checkpoint file in accordance with some embodiments. In the example shown, process 400 may be implemented by a storage system, such as one or more cloud servers 201.

At 402, a full backup of a current state of a storage is performed. A prefetcher associated with the storage system utilizes an API associated with a cloud object storage (e.g., ListObjectV2, ListObjectVersions, etc.) to traverse the object storage bucket and reads a list of objects returned by the API associated with the cloud object storage to identify a first set of object(s) stored in the object storage bucket. The prefetcher updates a checkpoint file to include the first set of objects. In response to the checkpoint file being updated, a backup engine associated with the storage system ingests the data associated with the object(s) included in the first set.

The API associated with the cloud object storage returns a finite number of objects each time the API is called. As the backup engine associated with the storage system is ingesting the data associated with the identified objects included in the first set, the prefetcher, in parallel, utilizes the API associated with the cloud object storage to traverse the object storage bucket and read a subsequent list of objects returned by the API associated with the cloud object storage to identify a second set of objects stored in the object storage bucket. The prefetcher updates the checkpoint file to include the objects included in the second set.

In some embodiments, the backup engine is still ingesting data associated with object(s) included in the first set when the prefetcher updates the checkpoint file to include the objects included in the second set. Objects stored in the checkpoint file in lexicographical order. As a result, the backup engine ingests the data associated with objects included in the second set after ingesting data associated with objects included in the first set. In some embodiments, the backup engine finished ingesting the data associated with the object(s) included in the first set when the prefetcher updates the checkpoint file to include the objects included in the second set. In response, the backup engine ingests the data associated with the objects included in the second set.

The above process of traversing the cloud object storage to identify a subsequent set of objects and ingesting data associated with a previous set of objects, in parallel, continues until an API call no longer returns a list of objects (e.g., the end of the cloud object storage has been reached). The storage system completes the full backup of object storage bucket by ingesting the data associated with a last list of objects stored in the object storage bucket.

At 404, a checkpoint file with the full backup is stored. The checkpoint file associated with the full backup represents the order in which the objects stored in the object storage bucket were encountered. The checkpoint file lists objects stored in the object storage bucket in lexicographically sorted order.

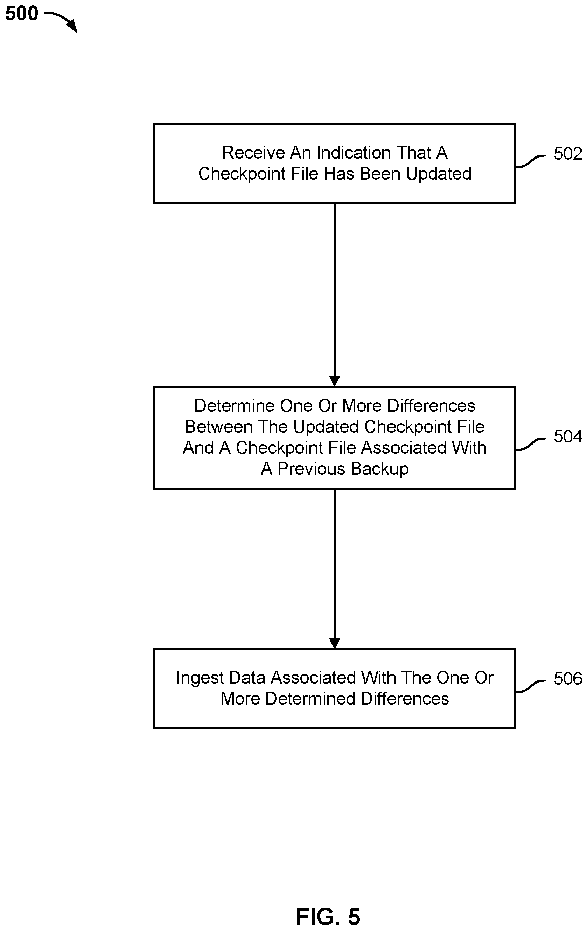

FIG. 5 is a flow diagram illustrating a process for performing a backup in accordance with some embodiments. In the example shown, process 500 may be implemented by a backup engine, such as backup engine 205. In some embodiments, process 500 is implemented to perform some of step 306 of process 300. Process 500 may be performed when a prefetcher finishes traversing an assigned subgroup.

At 502, an indication that a checkpoint file has been updated is received. A prefetcher utilizes an API associated with a cloud object storage to obtain a list of objects associated with a subgroup assigned to the prefetcher. The list of objects is stored in memory while the prefetcher is traversing the assigned subgroup. In response to the prefetcher determining that an entry of the obtained list of objects includes a partition identifier associated with a subsequent subgroup, the prefetcher updates the checkpoint file to include entries corresponding to the list of objects stored in memory except the entry corresponding to the partition identifier associated with the subsequent subgroup and any entries, if stored in memory, that are sequentially after the entry corresponding to the partition identifier associated with the subsequent subgroup. Any entries that are sequentially after the entry corresponding to the partition identifier associated with the subsequent subgroup may be discarded (e.g., deleted from memory).

At 504, one or more differences between the updated checkpoint file and a checkpoint file associated with the previous backup are determined. A backup agent obtains a checkpoint file associated with a previous backup. The backup agent reads a portion of the checkpoint file associated with the previous backup corresponding to objects assigned to the prefetcher (e.g., until the partition identifier associated with the subsequent subgroup is encountered) and compares the objects included in the read portion of the checkpoint file associated with the previous backup to the objects included in the updated portion of the checkpoint file associated with the current backup. The objects included in the checkpoint file associated with the previous backup and the checkpoint file associated with the current backup are listed in lexicographically sorted order. The storage system may identify one or more differences between a current state of the object storage bucket and a previous state of the object storage bucket corresponding to the previous backup based on the comparison.

At 506, data associated with the one or more determined differences is ingested. The data associated with the one or more determined differences may include object metadata and/or object data content. In some embodiments, the data associated with the one or more determined differences may indicate that an object was deleted after the previous backup. In some embodiments, the data associated with the one or more determined differences includes metadata associated with an object changed after the previous backup, the change data associated with the object after the previous backup, and/or the object metadata and object content data associated with an object that was created after the previous backup.

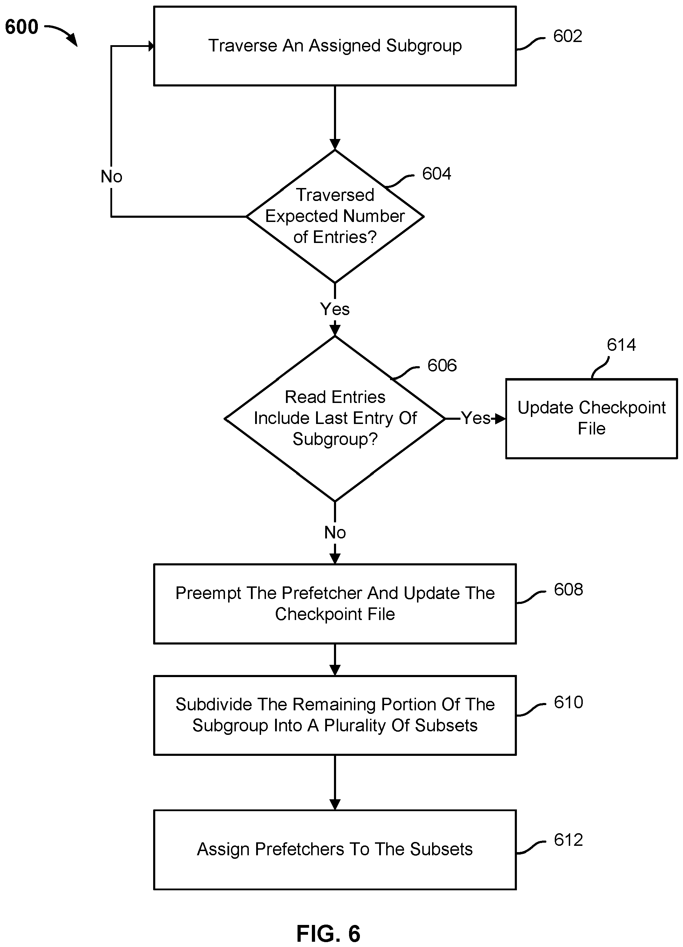

FIG. 6 is a flow diagram illustrating a process for traversing an assigned subgroup in accordance with some embodiments. In the example shown, process 600 may be implemented by a storage system, such as one or more servers 201. In some embodiments, process 600 is implemented to perform some of step 306 of process 300.

At 602, an assigned subgroup is traversed. An assigned subgroup may have an associated starting partition identifier and an ending partition identifier. In some embodiments, the ending partition identifier is the starting partition identifier associated with a subsequent subgroup. In some embodiments, the ending partition identifier is a " " value or a null value (e.g., for the last subgroup). An assigned subgroup is traversed by utilizing an API associated with a cloud object storage to obtain a list of objects stored in an object storage bucket. The list of objects includes one or more entries. Each entry corresponds to an object stored in the object storage bucket. The API associated with the cloud object storage may be configured to return a particular number of results (e.g., 1000) each time the API is invoked.

At 604, it is determined whether an expected number of entries associated with the subgroup have been traversed. Each subgroup is expected to have a particular number of entries (e.g., k entries + a threshold number of entries). In response to a determination that the expected number of entries associated with the subgroup have been traversed, process 600 proceeds to 606. In response to a determination that the expected number of entries associated with the subgroup have not been traversed, process 600 returns to 602.

At 606, it is determined whether the read entries associated with the subgroup include the last entry of the subgroup. The last entry of the subgroup has a partition identifier that is the same partition identifier as the first entry of the subsequent subgroup. In response to a determination that the read entries associated with the subgroup include the last entry of the subgroup, process 600 proceeds to 614. In response to a determination that the read entries associated with the subgroup do not include the last entry of the subgroup, process 600 proceeds to 608.

At 608, the prefetcher is preempted and the checkpoint file is updated. The prefetcher stops utilizing the API associated with the cloud object storage to obtain a list of entries associated with an assigned subgroup. The previously obtained plurality of entries associated with the subgroup are stored in memory. The prefetcher updates the checkpoint file to include the plurality of entries associated with the subgroup that are stored in memory.

At 610, the remaining portion of the subgroup is subdivided into a plurality of subsets. A prefetcher orchestrator further subdivides the remaining portion of the subgroup is subdivided into a plurality of subsets. The prefetcher orchestrator may utilize the checkpoint file associated with the previous backup and the checkpoint file associated with the current backup to determine how to subdivide the remaining portion of the subgroup. The prefetcher orchestrator may determine the last entry included in the checkpoint file associated with the current backup. The prefetcher orchestrator may determine if that entry is also included in the checkpoint file associated with the previous backup. In response to a determination that entry is in both checkpoint files, then the prefetcher orchestrator may determine the number of entries between that entry and the last entry for the subgroup in the checkpoint file associated with the previous backup.

In response to a determination that the entry is not in both checkpoint files, then the prefetcher orchestrator determines the entry that precedes the last entry that is included in both checkpoint files. The prefetcher orchestrator may determine the number of entries between the determined entry and the last entry for the subgroup in the checkpoint file associated with the previous backup.

The prefetcher orchestrator may divide the determined number of entries by 2, 3, 4, ..., or *n* to determine the number of entries per smaller subgroup. The prefetcher orchestrator may utilize the checkpoint file associated with the previous backup to identify the objects that correspond to the boundaries of the small subgroups. For example, the prefetcher orchestrator may identify delimiters associated with a subgroup (e.g., "/") to use as boundaries for the subsets. The prefetcher orchestrator determines common prefixes among the remaining objects associated with the subgroup based on the identified delimiters. The objects listed in FIG. 1A may correspond to a remaining portion of an assigned subgroup. The prefetcher orchestrator may subdivide the subgroup into subsets of "photos/1976/"... "photos/2006/", "photos/2007/", and "photos/2008" .

At 612, prefetchers are assigned to the subsets. In some embodiments, the prefetcher assigned to the subgroup is assigned to one of the subsets. The prefetchers walk an assigned subset.

At 614, the checkpoint file is updated. The checkpoint file associated with the backup is updated to store the entries associated with the assigned subgroup in lexicographically sorted order.

In some embodiments, the prefetcher finishes traversing an assigned subgroup before a prefetcher associated with a previous subgroup finishes traversing the previous subgroup. The entries associated with the assigned subgroup are stored in memory until the prefetcher associated with the previous subgroup finishes traversing the previous subgroup and updates the checkpoint file. Afterwards, the prefetcher may update the entries associated with the assigned subgroup. This ensures that entries included in the checkpoint file are listed in lexicographically sorted order.

The invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task. As used herein, the term 'processor' refers to one or more devices, circuits, and/or processing cores configured to process data, such as computer program instructions.

A detailed description of one or more embodiments of the invention is provided along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

Although the foregoing embodiments have been described in some detail for purposes of clarity of understanding, the invention is not limited to the details provided. There are many alternative ways of implementing the invention. The disclosed embodiments are illustrative and not restrictive.

Aspects of the present invention are provided with reference to the following clauses:
Clause 1: a method, comprising: determining to initiate a backup of a current state of a storage; analyzing a previous state of the storage storing key-object entries to identify partition identifiers; and using at least a portion of the partition identifiers as boundaries between subgroups of the key-object entries processed in parallel to perform the backup of the current state of the storage.
Clause 2: a method as described by clause 1, wherein the backup of the current state of the storage is determined to be backed up according to a backup policy.
Clause 3: a method as described by clause 1, wherein the storage is an object storage bucket.
Clause 4: a method as described by clause 3, wherein the object storage bucket is associated with a flat namespace.
Clause 5: a method as described by clause 1, wherein the backup of the current state of the storage is an incremental backup.
Clause 6: a method as described by clause 1, wherein the previous state of the storage storing key-object entries is analyzed by obtaining a checkpoint file associated with a previous backup of the storage.
Clause 7: a method as described by clause 6, wherein the checkpoint file associated with the previous backup of the storage includes a plurality of entries corresponding to a plurality of objects that are stored in lexicographically sorted order.
Clause 8: a method as described by clause 6, wherein the previous state of the storage storing key-object entries is analyzed by utilizing the checkpoint file associated with the previous backup of the storage to identify key-object entries corresponding to objects as the boundaries between the subgroups.
Clause 9: a method as described by clause 1, wherein using at least a portion of the partition identifiers as boundaries between subgroups of the key-object entries processed in parallel to perform the backup of the current state of the storage includes assigning a first prefetcher to a first subgroup of the subgroups.
Clause 10: a method as described by clause 9, wherein the first prefetcher obtains entries associated with the first subgroup.
Clause 11: a method as described by clause 10, wherein the first prefetcher analyzes the obtained entries associated with the first subgroup.
Clause 12: a method as described by clause 11, wherein the first prefetcher determines whether the obtained entries associated with the first subgroup includes a partition identifier associated with a second subgroup.
Clause 13: a method as described by clause 12, wherein in response to a determination that the obtained entries associated with the first subgroup includes a partition identifier associated with a second subgroup, the first prefetcher updates a checkpoint file associated with the backup of the current state of the storage.
Clause 14: a method as described by clause 13, further comprising performing the backup of the current state of the storage by comparing the checkpoint file associated with the backup of the current state of the storage to a checkpoint associated with the backup of a previous state of the storage to identify one or more differences.
Clause 15: a method as described by clause 14, wherein performing the backup of the current state of the storage includes ingesting data associated with the one or more differences.
Clause 16: a method as described by clause 12, wherein in response to a determination that the obtained entries associated with the first subgroup does not include a partition identifier associated with a second subgroup, the first prefetcher determines whether an expected number of entries associated with the first subgroup have been obtained.
Clause 17: a method as described by clause 16, wherein in response to a determination that the expected number of entries associated with the first subgroup have been obtained, the first prefetcher updates a checkpoint file associated with the backup of the current state of the storage.
Clause 18: a method as described by clause 17, wherein using at least a portion of the partition identifiers as boundaries between subgroups of the key-object entries processed in parallel to perform the backup of the current state of the storage further includes subdividing a remaining portion of the first subgroup into a plurality of subsets.
Clause 19: a computer program product embodied in a non-transitory computer readable medium and comprising computer instructions for: determining to initiate a backup of a current state of a storage; analyzing a previous state of the storage storing key-object entries to identify partition identifiers; and using at least a portion of the partition identifiers as boundaries between subgroups of the key-object entries processed in parallel to perform the backup of the current state of the storage.
Clause 20: a system, comprising: a processor configured to: determine to initiate a backup of a current state of a storage; analyze a previous state of the storage storing key-object entries to identify partition identifiers; and use at least a portion of the partition identifiers as boundaries between subgroups of the key-object entries processed in parallel to perform the backup of the current state of the storage; and a memory coupled to the processor and configured to provide the processor with instructions.

## Claims

1. A method for backing up a storage to a storage system, the method comprising:
determining that a backup of a current state of the storage is to be performed;
determining, based on key-object entries corresponding to a plurality of objects stored by the storage in a previous state, a plurality of partition identifiers representing boundaries that divide the key-object entries into a plurality of subgroups; and
performing the backup of the current state of the storage by backing up, in parallel, at least a portion of the plurality of subgroups.

2. The method of claim 1, wherein the storage is associated with a flat namespace.

3. The method of claim 1 or claim 2, wherein the backup of the current state of the storage is an incremental backup.

4. The method of any of claims 1 to 3, comprising obtaining a first checkpoint file associated with a backup of the previous state of the storage, wherein the first checkpoint file includes a first list of the plurality of objects stored by the storage in the previous state, wherein the first list comprises key-object entries corresponding to the plurality of objects, and wherein the plurality of partition identifiers are determined based on the first checkpoint file.

5. The method of claim 4, wherein the key-object entries are stored in the first checkpoint file in lexicographically sorted order.

6. The method of any of claims 1 to 5, wherein performing the backup, comprises, for each subgroup:
obtaining, from the storage, a second list of one or more objects stored by the storage in the current state that are associated with the subgroup, the second list of one or more objects comprising key-object entries corresponding to the one or more objects; and
ingesting, from the storage, data corresponding to the one or more objects stored by the storage in the current state based on the second list of one or more objects.

7. The method of claim 6, wherein performing the backup further comprises, for each subgroup:
updating a second checkpoint file associated with the backup of the current state of the storage to include the second list of one or more objects;
comparing the second checkpoint file associated with the backup of the current state of the storage to a first checkpoint file associated with a backup of the previous state of the storage storing a first list of a plurality of objects associated with the previous state of the storage, wherein the first list comprises key-object entries corresponding to the plurality of objects;
identifying one or more differences between the first and second checkpoint files,
wherein the data associated with the one or more differences is ingested.

8. The method of claim 7, wherein the second list of one or more objects comprises metadata relating to the objects, and wherein identifying one or more differences comprises identifying at least one of:
one or more objects that have been deleted after the previous backup;
one or more changes in metadata associated with an object after the previous backup;
one or more changes in data associated with the object after the previous backup; or
one or more objects that have been newly created after the previous backup.

9. The method of claim 7 or claim 8, wherein a prefetcher is assigned to each subgroup, wherein each prefetcher obtains the second list of one or more objects stored by the storage associated with its subgroup and updates the second checkpoint file, wherein the second checkpoint file is updated by the prefetcher dependent on determining that a prefetcher assigned to a previous subgroup has updated the second checkpoint file.

10. The method of any of claims 7 to 9, wherein obtaining, from the storage, the second list of one or more objects stored by the storage in the current state that are associated with the subgroup comprises:
making one or more calls to an API to request the second list of one or more objects associated with the subgroup, wherein the API returns entries relating to a finite number of objects each time the API is called;
receiving, via the API, one or more entries comprising at least a portion of the second list of one or more objects in response to the one or more calls;
updating the second checkpoint file to include the one or more entries.

11. The method of claim 10, wherein the second checkpoint file is updated to include the one or more entries dependent on determining that one or more entries include a partition identifier representing an end boundary of the subgroup or a beginning boundary of a subsequent subgroup.

12. The method of claim 10 or claim 11, wherein the second checkpoint file is updated to include the one or more entries dependent on determining that a number of entries received for the subgroup via the API exceeds an expected number of entries for the subgroup.

13. The method of claim 12, wherein, in response to determining that the number of entries received for the subgroup via the API exceeds the expected number of entries for the subgroup, obtaining, from the storage, the second list of one or more objects stored by the storage in the current state that are associated with the subgroup further comprises subdividing a remaining portion of the subgroup into a plurality of subsets, wherein the plurality of subsets are backed up in parallel.

14. A computer program product embodied in a non-transitory computer readable medium and comprising computer instructions for performing the method according to any of claims 1 to 13.

15. A system, comprising:
one or more processors; and
memory storing instructions, that, when implemented by the one or more processors, cause the system to perform the method of any of claims 1 to 13.
